# FASCICULE DE BREVET EUROPEEN

(11) **EP 1 883 544 B1**
(45) Date de publication et mention de la délivrance du brevet: **22.04.2009**
(21) Numéro de dépôt: 06763155.6
(22) Date de dépôt: 16.05.2006
(51) Int. Cl.: B60C 9/08, B60C 9/09, B60C 15/00

(54) **PNEUMATIQUE POUR ENGIN LOURD**
REIFEN FÜR EIN SCHWERFAHRZEUG
TIRE FOR A HEAVY VEHICLE

(30) Priorité: 18.05.2005 FR 0505057
(43) Date de publication de la demande: 06.02.2008
(73) Titulaire: Société de Technologie Michelin, 63000 Clermont-Ferrand (FR); Michelin Recherche et Technique S.A., 1763 Granges-Paccot (CH)
(72) Inventeur: DURIF, Pierre, F-63530 Enval (FR)
(74) Mandataire: Le Cam, Stéphane Georges Elie
(86) Numéro de dépôt international: PCT/EP2006/062335
(87) Numéro de publication internationale: WO 2006/122930

(56) Documents cités:
- PATENT ABSTRACTS OF JAPAN vol. 2000, no. 20, 10 juillet 2001 (2001-07-10) & JP 2001 080312 A (SUMITOMO RUBBER IND LTD), 27 mars 2001 (2001-03-27)
- PATENT ABSTRACTS OF JAPAN vol. 015, no. 178 (M-1110), 8 mai 1991 (1991-05-08) & JP 03 042307 A (OHTSU TIRE & RUBBER CO LTD :THE), 22 février 1991 (1991-02-22)
- PATENT ABSTRACTS OF JAPAN vol. 1998, no. 14, 31 décembre 1998 (1998-12-31) & JP 10 258612 A (YOKOHAMA RUBBER CO LTD:THE), 29 septembre 1998 (1998-09-29)

## Description

L'invention concerne un pneumatique à armature de carcasse radiale destiné à équiper un véhicule lourd tel qu'un véhicule de transport ou un engin de « Génie Civil ».

Bien que non limité à ce type d'application, l'invention sera plus particulièrement décrite en référence à un pneumatique présentant une largeur axiale supérieure à 37 pouces.

Un tel pneumatique, destiné généralement à porter de lourdes charges, comprend une armature de carcasse radiale, et une armature de sommet composée d'au moins deux nappes de sommet de travail, formées d'éléments de renforcement inextensibles, croisés d'une nappe à la suivante et faisant avec la direction circonférentielle des angles égaux ou inégaux, et compris entre 10 et 45°.

De tels pneumatiques, habituellement fabriqués selon des procédés "classiques" présentent des éléments d'ancrage, tels que des tringles, utilisés pour réaliser l'ancrage ou le maintien de l'armature de carcasse dans la zone des bourrelets du pneumatique. Au moins une nappe carcasse constituant l'armature de carcasse présente un retournement d'une portion autour d'une tringle disposée dans le bourrelet du pneumatique. On crée de la sorte un ancrage de l'armature de carcasse dans le bourrelet.

L'armature de carcasse radiale est soumise à des contraintes importantes, notamment lors du gonflage du pneumatique puis lors de son utilisation. Ces contraintes engendrent des contraintes de cisaillement notamment radiales. Ces contraintes sont dues en premier lieu à la pression de gonflage du pneumatique qui tend à provoquer l'expansion circonférentielle de ladite armature de sommet ; Lesdites contraintes sont ensuite dues à la charge portée par le pneumatique et aux déformations en roulage du fait notamment du passage de la bande de roulement dans l'aire de contact ou surface de contact entre sol et pneumatique. Ces contraintes conduisent à l'apparition de fissures dans les mélanges caoutchouteux, fissures qui se propagent dans ledit mélange et qui pénalisent l'endurance du pneumatique.

Une amélioration de l'endurance peut être obtenue dans le cas des pneumatiques pour engin lourd par une longueur du retournement de la nappe carcasse autour de la tringle plus importante. Il est en effet connu de réaliser des pneumatiques dont la longueur du retournement est augmentée et s'étend notamment jusqu'à une position telle que lors d'un passage dans la zone de l'aire de contact l'extrémité dudit retournement se trouve sensiblement dans la zone de plus grande largeur axiale de la nappe carcasse selon une coupe radiale d'un pneumatique dans les conditions nominales d'utilisation. Les résultats obtenus avec ce type de conception montre qu'effectivement les mélanges caoutchouteux dans lesquels étaient observés des fissurations du fait des contraintes de cisaillement radiales entre la nappe carcasse et sa portion retournée autour de la tringle sont protégés de ces altérations. Le couplage sur une plus grande distance de la nappe carcasse et de son retournement permet effectivement de diminuer les contraintes de cisaillement induites dans les mélanges caoutchouteux de séparation. En outre, la position de l'extrémité du retournement dans une zone ou les contraintes de cisaillement sont au minimum permet de limiter les risques de fissuration aux extrémités dudit retournement de la nappes carcasse.

Dans le cas des pneumatiques pour engin lourd présentant notamment une largeur axiale supérieure à 37 pouces, la longueur du retournement devient plus grande et augmente naturellement avec la dimension du pneumatique. Il s'ensuit que la zone de couplage entre la portion de retournement et la nappe carcasse est plus importante et semble être à l'origine de l'amorce d'altération des éléments de renforcement pouvant être observée dans certains types d'utilisation du pneumatique. Ce phénomène peut s'expliquer notamment par la mise en compression desdits éléments de renforcement dans la zone d'appui sur le crochet de jante de la roue sur laquelle est monté le pneumatique.
Le document JP-A-2001.080312 montre un pneumatique poids-lourds correspondant an préambule de la revendication 1.

On entend par « axiale », une direction parallèle à l'axe de rotation du pneumatique et par « radiale » une direction coupant l'axe de rotation du pneumatique et perpendiculaire à celui-ci. L'axe de rotation du pneumatique est l'axe autour duquel il tourne en utilisation normale. Le plan médian circonférentiel est un plan perpendiculaire à l'axe de rotation du pneu et qui divise le pneumatique en deux moitiés. Un plan radial est un plan qui contient l'axe de rotation du pneumatique.

Dans leurs études et notamment durant l'étude de la réalisation de pneumatiques de dimensions plus importantes, notamment dont la largeur axiale est supérieure à 37 pouces, les inventeurs se sont donnés pour mission d'obtenir une endurance satisfaisante des pneumatiques pour des engins lourds.

Ce but a été atteint selon l'invention par un pneumatique pour engin lourd, comprenant une armature de carcasse radiale surmontée radialement d'une armature de sommet de travail, l'armature de carcasse comportant au moins une nappe d'éléments de renforcement ancrée dans chacun des bourrelets par enroulement autour d'une tringle pour former un retournement, l'extrémité radialement extérieure du retournement étant à une distance de la partie radialement extérieure de la tringle inférieure à 40 % de la hauteur du flanc, ledit pneumatique comprenant au moins une nappe complémentaire d'éléments de renforcement orientés radialement,présentant des modules de compression et d'extension au moins 1.5 fois inférieurs à ceux de la nappe de l'armature de carcasse, et ladite nappe complémentaire étant axialement adjacente au retournement de la nappe carcasse sur une distance supérieure à 15 % de la hauteur du flanc.

La hauteur de flanc est définie selon l'invention comme la distance selon la direction radiale entre la partie radialement extérieure de la tringle et le point radialement le plus à l'extérieur de la nappe carcasse à l'état gonflé dans les conditions nominales.

Le pneumatique ainsi défini selon l'invention a permis d'effectuer des roulages puis des analyses dudit pneumatique qui ont mis en évidence que l'endurance d'un tel pneumatique est améliorée. En effet, le pneumatique selon l'invention qui présente une longueur du retournement de la nappe carcasse inférieure à la pratique courante telle que décrite précédemment permet d'éviter la mise en compression au niveau de l'appui sur les crochets de jante des éléments de renforcement qui composent la nappe carcasse. En outre, il s'est avéré que la présence d'au moins une nappe complémentaire telle que décrite selon l'invention permet de limiter l'apparition et/ou la propagation de fissures notamment dues aux contraintes de cisaillement dans les mélanges caoutchouteux, notamment dans la zone de retournement de la nappe carcasse.

Selon un mode de réalisation préféré de l'invention, l'extrémité radialement extérieure du retournement est à une distance de la partie radialement extérieure de la tringle supérieure à 15 % de la hauteur du flanc. Une telle configuration est notamment préférable pour limiter l'amplitude des contraintes apparaissant aux extrémités des retournements de nappe carcasse.

De préférence encore, l'extrémité radialement extérieure du retournement est à une distance de la partie radialement extérieure de la tringle inférieure à 35 % de la hauteur du flanc.

Une variante avantageuse de l'invention prévoit que les éléments de renforcement d'au moins une nappe complémentaire sont des éléments de renforcement métalliques élastiques.

Des éléments de renforcement métalliques élastiques sont des câbles présentant à la rupture un allongement relatif au moins égal à 4%.

Les essais réalisés ont montré que les pneumatiques réalisés selon cette variante de l'invention présentent une endurance encore supérieure. La nature élastique des éléments de renforcement semble diminuer encore les contraintes de cisaillement induites dans les mélanges caoutchouteux.

De manière préférée encore selon l'invention, l'extrémité radialement intérieure de la nappe complémentaire est axialement extérieure au retournement de la nappe carcasse. Selon cette réalisation préférée de l'invention, la nappe complémentaire est adjacente au retournement de la nappe carcasse et positionnée axialement à l'extérieur de celui-ci. De telles réalisations ont montré, notamment dans le cas d'éléments de renforcement élastiques, que l'apparition de fissures diminuait encore, notamment dans les masses caoutchouteuses axialement extérieures au retournement de la nappe carcasse.

Selon d'autres réalisations de l'invention, le pneumatique comporte au moins une nappe complémentaire prise en sandwich entre la nappe carcasse et son retournement dans la partie radialement intérieure de ladite nappe complémentaire.

Selon une variante de réalisation de l'invention, le pneumatique comprenant deux nappes complémentaires, au moins une nappe complémentaire est axialement intérieure au retournement de la nappe carcasse. Un tel pneumatique réalisé selon l'invention présentera avantageusement une nappe complémentaire de part et d'autre du retournement de la nappe carcasse selon la direction axiale.

Avantageusement encore selon l'invention, l'extrémité radialement extérieure de la nappe complémentaire est à une distance de la partie radialement extérieure de la tringle supérieure à 50 % de la hauteur du flanc. Une nappe complémentaire d'un pneumatique réalisé selon cette variante de l'invention conduit encore à une diminution des contraintes pouvant apparaître dans les mélanges caoutchouteux. En outre la nature métallique des éléments de renforcement de la nappe complémentaire permet d'évacuer des calories depuis la zone du bourrelet du pneumatique vers la zone du flanc, zone dans laquelle les épaisseurs des mélanges caoutchouteux sont plus favorables à l'évacuation des calories. Des nappes complémentaires s'étendant jusqu'aux zones des épaules des pneumatiques peuvent en outre avoir un effet thermique similaire pour évacuer les calories apparaissant dans lesdites zones des épaules du pneumatique.

Un pneumatique tel qu'il vient d'être défini selon l'invention, c'est-à-dire qui comporte un retournement de la nappe carcasse de dimension réduite par rapport à celui d'un pneumatique usuel associé à une nappe complémentaire s'étendant dans le flanc du pneumatique permet d'améliorer l'endurance des pneumatiques pour véhicule lourd. Il s'avère en effet que le pneumatique selon l'invention permet d'éviter l'apparition de contrainte de compression dans les éléments de renforcements du retournement de la nappe carcasse, tout en conservant une maîtrise de l'apparition de contraintes de cisaillement dans les mélanges caoutchouteux.

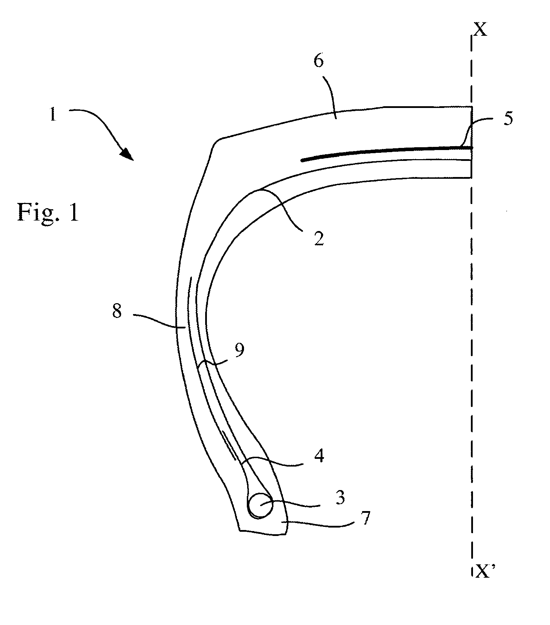

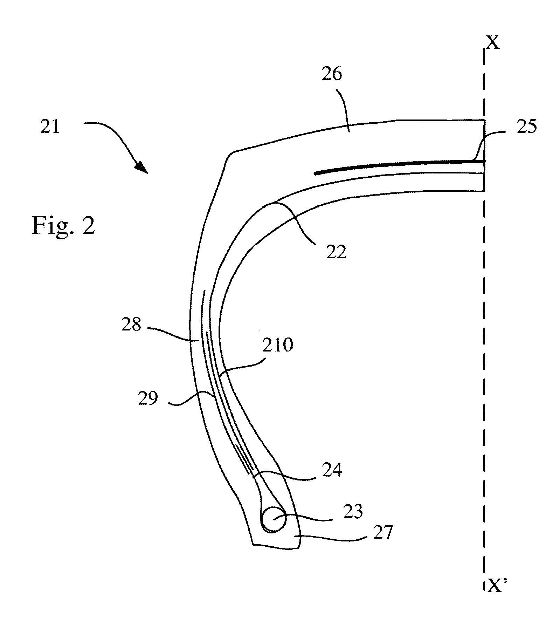

D'autres détails et caractéristiques avantageux de l'invention ressortiront ci-après de la description d'exemples de réalisation de l'invention en référence aux figures 1 et 2 qui représentent :
- figure 1, une représentation schématique et partielle d'un pneumatique vue en coupe radiale selon une première réalisation selon l'invention,
- figure 2, une représentation schématique et partielle d'un pneumatique vue en coupe radiale selon une deuxième réalisation selon l'invention,
Les figures ne sont pas représentées à l'échelle pour en simplifier la compréhension. Les figures ne représentent que la moitié des pneumatique qui se prolongent de manière symétrique par rapport à l'axe XX' qui représente le plan médian circonférentiel d'un pneumatique.

Sur la figure 1, est représentée de manière schématique une coupe radiale d'un pneumatique 1 habituellement utilisé pour des engins de Génie Civil.

Ce pneumatique 1 est un pneumatique de dimension 59/80 R 63.

Ce pneumatique 1 comprend une armature de carcasse 2 composée d'une nappe de câbles métalliques inextensibles en acier, ancrée dans chaque bourrelet à une tringle 3 pour former un retournement 4 dont l'extrémité conformément à l'invention est sensiblement située, conformément à l'invention, radialement à un niveau intérieur à celui de la plus grande largeur axiale de l'armature de carcasse 2. L'armature de carcasse 2 est surmontée radialement d'une armature de sommet 5. Ladite armature de sommet 5 est habituellement constituée, d'une part de deux nappes dites de travail et d'autre part de deux nappes de protection. L'ensemble de ces nappes constituant l'armature de sommet n'est pas représenté dans le détail sur les figures. Les nappes de travail sont elles-mêmes constituées de câbles inextensibles en acier, parallèles entre eux dans chaque nappe, et croisés d'une nappe à la suivante en faisant avec la direction circonférentielle des angles pouvant être compris entre 15° et 40°. Les nappes de protection sont généralement constituées de câbles métalliques en acier élastiques, parallèles entre eux dans chaque nappe et croisés entre eux d'une nappe à la suivante en faisant des angles pouvant être compris entre 15 et 45°. Les câbles de la panne de travail radialement extérieure sont usuellement croisés avec les câbles de la nappe de protection radialement intérieure. L'armature de sommet est enfin surmontée d'une bande de roulement 6 qui est réunie aux deux bourrelets 7 par les deux flancs 8.

Conformément à l'invention, une nappe complémentaire 9 vient compléter l'armature de carcasse. Cette nappe complémentaire 9 est constituée de câbles métalliques élastique de type E24x26 NF (non fretté). Elle est, sur sa partie radialement intérieure, axialement adjacente au retournement 4 de la nappe carcasse et s'étend jusque dans le flanc du pneumatique. L'extrémité radialement extérieure de la nappe complémentaire 9 est à une distance de la partie radialement extérieure de la tringle égale à 59 % de la hauteur du flanc.

Dans le pneumatique réalisé et représenté sur la figure 1, l'extrémité radialement extérieure du retournement 4 est à une distance de la partie radialement extérieure de la tringle égale à 33 % de la hauteur du flanc.

La nappe complémentaire 9 est axialement adjacente au retournement de la nappe carcasse sur une distance égale à 32 % de la hauteur du flanc.

Comparé à un pneumatique usuel, l'extrémité radialement extérieure du retournement 4 de la nappe carcasse est à une distance inférieure, selon la direction radiale, de la tringle 3 ; la dimension de ce retournement 4 de la nappe carcasse est donc réduite par rapport à un pneumatique de conception usuelle.

Une telle réalisation permet notamment d'éviter la mise en compression des éléments de renforcement de ce retournement 4 notamment lors du passage dans la zone de l'aire de contact.

La présence de la nappe complémentaire 9 constituée d'éléments de câbles métalliques élastiques permet d'éviter l'apparition de contraintes de cisaillement dans les mélanges caoutchouteux ou tout au moins d'en limiter l'effet sur lesdits mélanges.

Sur la figure 2, on a représenté de manière schématique en coupe radiale une deuxième réalisation d'un pneumatique selon l'invention. Selon cette réalisation, le pneumatique 21 présente les mêmes caractéristiques que le pneumatique 1 de la figure 1 ; le pneumatique 21 présente en outre une deuxième nappe complémentaire 210.

Cette deuxième nappe complémentaire 210 est mise en place axialement entre la première nappe complémentaire 29 et la nappe carcasse 22. Selon le cas représenté sur la figure 2, la partie radialement intérieure de ladite deuxième nappe complémentaire 210 est adjacente et axialement à l'intérieur du retournement 24 de la nappe carcasse 22.

La deuxième nappe complémentaire 210 est axialement adjacente au retournement 24 de la nappe carcasse sur une distance sensiblement égale à celle sur laquelle la nappe complémentaire 29 est adjacente audit retournement 24, c'est-à-dire sensiblement égale à 32 % de la hauteur du flanc. L'extrémité radialement extérieure de la nappe complémentaire 210 est à une distance de la partie radialement extérieure de la tringle égale à 55 % de la hauteur du flanc.

Dans le cas du pneumatique représenté sur la figure 2, les extrémité radialement extérieures des deux nappes complémentaires sont à des postions radiales différentes. Une telle réalisation permet avantageusement de limiter les effets d'extrémités de nappe, la nappe 29 couvrant axialement l'extrémité radialement extérieure de la deuxième nappe complémentaire 210. Selon d'autres réalisations conformes à l'invention, la nappe complémentaire axialement intérieure peut couvrir axialement l'extrémité radialement extérieure de la nappe complémentaire axialement extérieure, toujours dans le but de limiter les effets d'extrémités de nappe.

L'interprétation de ces exemples ne doit pas se faire de façon limitative, les variantes de réalisation étant nombreuses ; il est notamment possible de prévoir une réalisation avec une seule nappe complémentaire dans la configuration de la nappe 210. Il est encore possible d'avoir un nombre de nappes complémentaires plus important. Il est également envisageable d'augmenter la longueur des nappes complémentaires notamment pour obtenir un effet sur la thermique des épaules du pneumatique tel qu'il l'a été évoqué précédemment.

## Revendications

1. - Pneumatique pour engin lourd, comprenant une armature de carcasse radiale (2) surmontée radialement d'une armature de sommet de travail (5), l'armature de carcasse comportant au moins une nappe d'éléments de renforcement ancrée dans chacun des bourrelets (7) par enroulement autour d'une tringle (3) pour former un retournement (4), l'extrémité radialement extérieure du retournement étant à une distance de la partie radialement extérieure de la tringle inférieure à 40 % de la hauteur du flanc (8), ledit pneumatique comprenant au moins une nappe complémentaire (9) d'éléments de renforcement ladite nappe complémentaire étant axialement adjacente au retournement de la nappe carcasse sur une distance supérieure à 15 % de la hauteur du flanc, **caractérisé en ce que** lesdits élements de renforcement sont orientés radialement et **en ce qu'**ils présentent des modules de compression et d'extension au moins 1.5 fois inférieurs à ceux de la nappe de l'armature de carcasse.

2. - Pneumatique selon la revendication 1, **caractérisé en ce que** l'extrémité radialement extérieure du retournement est à une distance de la partie radialement extérieure de la tringle supérieure à 15 % de la hauteur du flanc.

3. - Pneumatique selon la revendication 1 ou 2, **caractérisé en ce que** l'extrémité radialement extérieure du retournement est à une distance de la partie radialement extérieure de la tringle inférieure à 35 % de la hauteur du flanc.

4. - Pneumatique selon la revendication 1 à 3, **caractérisé en ce que** les éléments de renforcement d'au moins une nappe complémentaire sont des éléments de renforcement métalliques élastiques.

5. - Pneumatique selon la revendication 1 à 4, **caractérisé en ce que** l'extrémité radialement intérieure de la nappe complémentaire est axialement extérieure au retournement de la nappe carcasse.

6. - Pneumatique selon l'une de revendications 1 à 5, **caractérisé en ce que** l'extrémité radialement extérieure de la nappe complémentaire est à une distance de la partie radialement extérieure de la tringle supérieure à 50 % de la hauteur du flanc.

7. - Pneumatique selon l'une des revendications 1 à 6, ledit pneumatique comprenant deux nappes complémentaires, **caractérisé en ce que** au moins une nappe complémentaire est axialement intérieure au retournement de la nappe carcasse.

## Claims

1. Tire for a heavy vehicle, comprising a radial carcass reinforcement (2) surmounted radially by a working crown reinforcement (5), the carcass reinforcement comprising at least one ply of reinforcing members which is anchored in each of the beads (7) by being wrapped around a bead wire (3) in order to form a ply turn-up (4), the radially outer end of the ply turn-up being at a distance from the radially outer part of the bead wire of less than 40% of the height of the sidewall (8), said tire comprising at least one complementary ply (9) of reinforcing members, said complementary ply being axially adjacent the carcass ply turn-up over a distance greater than 15% of the height of the sidewall, **characterized in that** said reinforcing members are radially oriented and **in that** they have compressive and tensile moduli at least 1.5 times lower than those of the carcass reinforcement ply.

2. Tire according to claim 1, **characterized in that** the radially outer end of the ply turn-up is at a distance from the radially outer part of the bead wire of greater than 15% of the height of the sidewall.

3. Tire according to claim 1 or 2, **characterized in that** the radially outer end of the ply turn-up is at a distance from the radially outer part of the bead wire of less than 35% of the height of the sidewall.

4. Tire according to claims 1 to 3, **characterized in that** the reinforcing members of at least one complementary ply are resilient metal reinforcing members.

5. Tire according to claims 1 to 4, **characterized in that** the radially inner end of the complementary ply is axially to the outside of the carcass ply turn-up.

6. Tire according claims 1 to 5, **characterized in that** the radially outer end of the complementary ply is at a distance from the radially outer part of the bead wire of greater than 50% of the height of the sidewall.

7. Tire according one of claims 1 to 6, said tire comprising two complementary plies, **characterized in that** at least one complementary ply is axially internal to the carcass ply turn-up.

## Patentansprüche

1. Luftreifen für ein Schwerfahrzeug, mit einer radialen Karkassenbewehrung (2), über der radial eine Arbeitsscheitelbewehrung (5) liegt, wobei die Karkassenbewehrung mindestens eine Lage von Verstärkungselementen aufweist, die in jedem der Wülste (7) durch Aufwickeln um einen Wulstkern (3) verankert ist, um einen Umschlag (4) zu bilden, wobei das radial äußere Ende des Umschlags sich in einem Abstand zum radial äußeren Bereich des Wulstkerns von weniger als 40 % der Höhe der Flanke (8) befindet, wobei der Luftreifen mindestens eine komplementäre Lage (9) von Verstärkungselementen aufweist, wobei die komplementäre Lage axial dem Umschlag der Karkassenlage über eine Strecke von mehr als 15 % der Höhe der Flanke benachbart ist, **dadurch gekennzeichnet, dass** die Verstärkungselemente radial ausgerichtet sind und dass sie Kompressions- und Extensionsmodule mindestens 1,5 mal kleiner als diejenigen der Lage der Karkassenbewehrung aufweisen.

2. Luftreifen nach Anspruch 1, **dadurch gekennzeichnet, dass** das radial äußere Ende des Umschlags sich in einem Abstand von dem radial äußeren Bereich des Wulstkerns befindet, der größer ist als 15 % der Höhe der Flanke.

3. Luftreifen nach Anspruch 1 oder 2, **dadurch gekennzeichnet, dass** das radial äußere Ende des Umschlags sich in einem Abstand von dem radial äußeren Bereich des Wulstkerns befindet, der geringer ist als 35 % der Höhe der Flanke.

4. Luftreifen nach Anspruch 1 bis 3, **dadurch gekennzeichnet, dass** die Verstärkungselemente mindestens einer komplementären Lage elastische metallische Verstärkungselemente sind.

5. Luftreifen nach Anspruch 1 bis 4, **dadurch gekennzeichnet, dass** das radial innere Ende der komplementären Lage axial außerhalb des Umschlags der Karkassenlage liegt.

6. Luftreifen nach einem der Ansprüche 1 bis 5, **dadurch gekennzeichnet, dass** das radial äußere Ende der komplementären Lage sich in einem Abstand zum radial äußeren Bereich des Wulstkerns befindet, der größer ist als 50 % der Höhe der Flanke.

7. Luftreifen nach einem der Ansprüche 1 bis 6, wobei der Luftreifen zwei komplementäre Lagen aufweist, **dadurch gekennzeichnet, dass** mindestens eine komplementäre Lage axial innerhalb des Umschlags der Karkassenlage liegt.
